Europäisches Patentamt

European Patent Office

Office européen des brevets

(19)

(11) Publication number: **0 073 094**
**B1**

(12) **EUROPEAN PATENT SPECIFICATION**

(45) Date of publication of patent specification: **22.01.86**

(51) Int. Cl.⁴: **B 29 C 65/74, A 47 K 3/22**

(21) Application number: **82302925.1**

(22) Date of filing: **07.06.82**

(54) Improved curtain.

(30) Priority: **21.08.81 GB 8125644**

(43) Date of publication of application:
**02.03.83 Bulletin 83/09**

(45) Publication of the grant of the patent:
**22.01.86 Bulletin 86/04**

(84) Designated Contracting States:
**BE DE FR IT LU NL SE**

(56) References cited:
**GB-A-2 053 793**
**US-A-3 075 573**
**US-A-3 099 596**
**US-A-3 939 033**
**US-A-4 202 059**

(73) Proprietor: **The Croydex Company Limited**
**Walworth Industrial Estate Central Way**
**Andover Hampshire SP10 5AW (GB)**

(72) Inventor: **Van Aardt, Peter**
**4, Cheavley Close**
**Andover Hamsphire (GB)**

(74) Representative: **Smith, Geoffrey Leonard et al**
**Marks & Clerk Friars House 6 - 10 Parkway**
**Chelmsford Essex CM2 0NF (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to curtains, and more particularly shower curtains, which are provided adjacent one edge with one or more holes for suspension of the curtain from a suitable rod or other suspension system, e.g. by receiving snap-in curtain rings.

Such holes have to date been high frequency welded in weldable materials or punched and reinforced with metal eyelets in non-weldable materials. The curtain may or may not have an insert strip, e.g. of polyvinyl chloride, positioned in the top edge of the curtain.

In order to form and reinforce the suspension holes, the holes are conventionally punched through two thicknesses of nylon curtain and the insert strip. A one or two part metal eyelet is then pneumatically fitted through the hole. A section through a typical hole will then have as successive layers: metal eyelet, curtain material, strip material, curtain material, metal eyelet.

It is also known from US—A—3075573 to punch holes in thermoplastic material and simultaneous to form sealing welds at the peripheries of such holes.

It has been proposed in US—A—4202059 to provide a shower curtain with a reinforced head by means of a stiffening strip welded along its edge to one of two layers of curtain material and a cover strip welded onto the stiffening strip. Apertures are formed in the head by punching and sealing the already welded head assembly. It is not at all clear that the holes would be strong enough to make eyelets unnecessary. The technique of ultrasonic welding is well known but has not hitherto been applied to the formation of support holes in shower or like curtains.

It has been found that it is particularly advantageous in the manufacture of shower curtains to use a technique of ultrasonic welding to pierce and seal the holes in the curtain, and at the same time to form an area surrounding the hole which is formed by at least two layers of the material welded together in order to reinforce the hole and to make the conventional eyelet unnecessary.

In accordance with the invention, there is provided a method of forming a reinforced hole in a curtain of plastics material, characterised in that two layers of the curtain material with a reinforcing layer or insert of thermoplastic material between them are ultrasonically welded together over a configuration circumscribing the position of the required hole and spaced therefrom, and the hole is cut and sealed in the area so circumscribed simultaneously with the welding.

Where the curtain material is non-weldable, the layer or insert may be ultrasonically welded so as to diffuse into the curtain material of both layers to hold them together over the said configuration.

The use of metal eyelets is thus avoided and the reinforcement of the hole provided by the welding together of areas of the two sheets of the curtain material or by diffusion of the insert strip material into the curtain material.

It is preferred that the configuration of the ultrasonic welding should be a series of areas arranged in a circle concentric with the required hole, and the said areas themselves may be circular in shape.

A coloured tape may be introduced between the curtain material and an ultrasonic welding tool to colour the welded areas.

The invention will be further described with reference to the accompanying diagrammatic drawings, in which:

Figure 1 is an elevation, partially cut-away, of a shower curtain to which the invention may be applied;

Figure 2 is a section through the upper portion of the curtain prior to formation of reinforced holes;

Figure 3 is a diagrammatic sectional view taken on the line III—III of Figure 4 showing the structure of Figure 2 submitted to ultrasonic welding;

Figure 4 is a plan view of parts of the structure shown in Figure 3;

Figures 5 and 6 show alternative welding patterns; and

Figure 7 is an elevation showing a further typical pattern of ultrasonic welding around a reinforced hole formed in accordance with the invention.

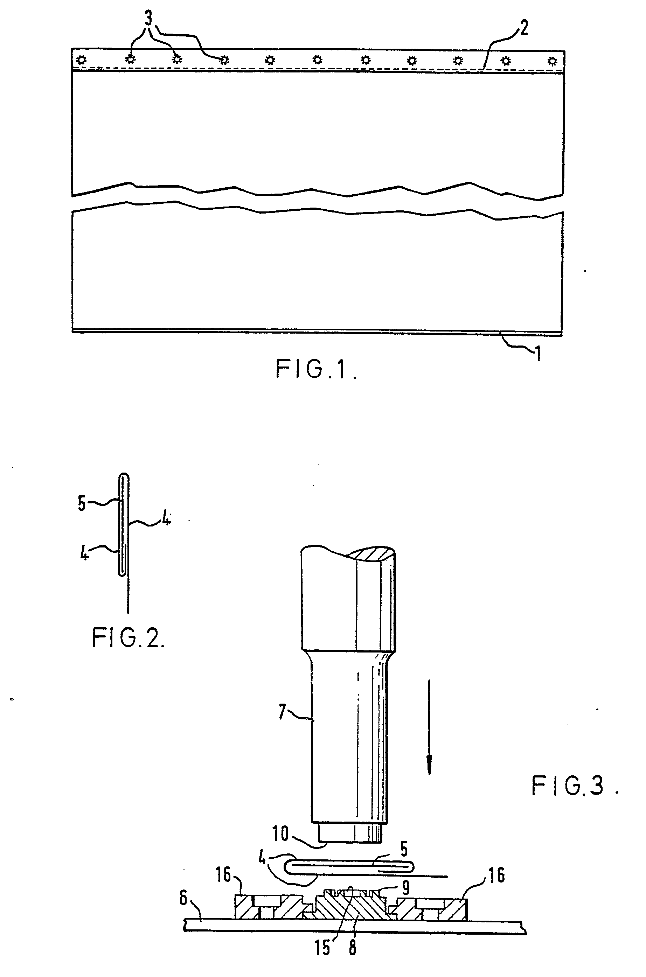

A shower curtain normally consists of a sheet of material, for example a nylon fabric, which is weldable, but non-weldable materials may also be used. A lower edge may be turned over to enclose a leaded weight strip so as to form a bead 1 at the lower edge of the curtain as shown in Figure 1. The upper edge of the curtain is also turned back and sewn or welded to the main body of the curtain along a line indicated at 2. A reinforcing strip or piece of polyvinyl chloride or similar material is normally sewn or welded in to reinforce this upper edge. Holes 3 are formed along the upper edge to receive curtain rings to suspend the curtain from a suitable rod or other suspension system, and these holes are normally reinforced by metal eyelets applied after punching.

Figure 2 shows two layers 4 of the curtain material with a layer 5 of the thermoplastic reinforcement material between them.

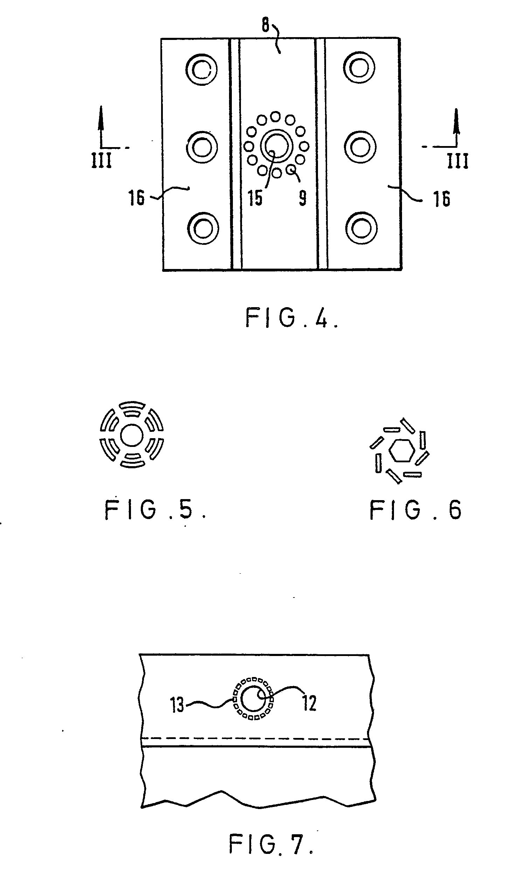

In accordance with the invention, the reinforcement is provided by ultrasonically welding together the two sheets 4 of curtain material. If the curtain material is weldable they may be directly welded together, i.e. without a layer or strip 5, and if this is provided it is welded to both sheets. If the curtain material is non-weldable, the sheet or strip 5 is caused to diffuse into both layers 4 of the curtain material to form an effective weld. The welding is achieved over a suitable pattern surrounding the intended position of the hole, and Figures 3 and 4 show an anvil 8, a plinth 6 and an ultrasonic horn 7 of an ultrasonic welding machine. The horn 7 is preferably of titanium. The metal, usually steel, anvil 8 is mounted on the plinth 6 and carries a raised pattern 9 against which a flat face 10, formed on a brass button 10a on the horn 7, presses the laminate of sheets 4 and 5 to form the required weld. A knife blade 15 is provided in the centre of the anvil 8 to cut and seal the hole simultaneously with the formation of the weld. The anvil 8 is shown as secured to the plinth 6 by clamps 16.

Figure 4 shows a typical pattern of welding to form a reinforced hole. The raised pattern 9 is in the form of a series of circular pips arranged in a ring concentric with the knife blade 15. In Figure 4, the hole itself as formed by the knife blade 15 is shown at 12 and it can be seen that it is surrounded by a pattern of welded areas 13. If formed by the pattern 9, the welded areas would each be circular and with their centres arranged on a circle concentric with the circular hole 12. As shown, the welded areas are part annular to illustrate a possible modification. Other alternative form of weld pattern are shown in Figures 5 and 6.

By using ultrasonic welding to form the reinforced holes, rather than eyeletted holes, it will be seen that the use of metal eyelets is avoided, and also therefore the necessity of placing the eyelets, in the machine, either manually or otherwise. Accordingly the process of production is less labour intensive and faster and cheaper than the conventional process.

Various modifications may be made, for example, a raised pattern may be formed on the button 10a instead of or additionally to the pattern 9 on the anvil 8. Also the central hole 12 need not be circular, nor need the pattern of welds be arranged in a circle around the central hole.

In addition in order to emphasise the reinforced· holes, to make an aesthetic feature, the welded areas may be coloured, for example by introducing a coloured tape between the ultrasonic horn or face 10 and the material 4.

## Claims

1. A method of forming a reinforced hole in a curtain of plastics material, characterised in that two layers (4) of the curtain material with a reinforcing layer (5) or insert of thermoplastic material between them·are ultrasonically welded together over a configuration circumscribing the position of the required hole (3) and spaced therefrom, and the hole (3) is cut and sealed in the area so circumscribed simultaneously with the welding.

2. A method according to claim 1, in which the curtain material is non-weldable, characterised in that the layer (5) or insert is ultrasonically welded so as to diffuse into the curtain material of both layers (4) to hold them together over the said configuration.

3. A method according to claim 1 or 2, characterised in that the configuration of the ultrasonic welding is a series of areas (13) arranged in a circle centred on the required holes (3).

4. A method according to claim 3, characterised in that the areas are circular.

5. A method according to any of claims 1 to 4, characterised in that a coloured tape is introduced between the curtain material and an ultrasonic welding tool.

## Patentansprüche

1. Verfahren zum Bilden eines verstärkten Loches in einem Vorhang aus Kunststoffmaterial, dadurch gekennzeichnet, daß zwei Schichten (4) des Vorhangmaterials mit einer Verstärkungsschicht (5) oder einem Einsatz aus thermoplastischem Material zwischen diesen durch Ultraschall über eine Konfiguration zusammengeschweißt werden, welche die Lage des erforderlichen Loches (3) umschreibt und von diedem im Abstand liegt, und daß das Loch (3) in dem so umschriebenen Bereich gleichzeitig mit dem Schweißen eingeschnitten und abgedichtet wird.

2. Verfahren nach Anspruch 1, in dem das Vorhangmaterial nicht schweißbar ist, dadurch gekennzeichnet, daß die Schicht (5) oder der Einsatz durch Ultraschall so geschweißt wird, daß es in das Vorhangmaterial beider Schichten (4) diffundiert, um diese über die genannte Konfiguration zusammenzuhalten.

3. Verfahren nach Anspruch 1 oder 2, dadurch gekennzeichnet, daß die Konfiguration der Ultraschallschweißung eine Reihe von Bereichen (13) ist, die in einem Kreis angeordnet sind, der um das erforderliche Loch (3) zentriert ist.

4. Verfahren nach Anspruch 3, dadurch gekennzeichnet, daß die Bereiche kreisförmig sind.

5. Verfahren nach irgend einem der Ansprüche 1 bis 4, dadurch gekennzeichnet, daß eine farbiges Band zwischen das Vorhangmaterial und ein Ultraschallschweißwerkzeug eingeführt wird.

## Revendications

1. Procédé pour former un trou renforcé dans un rideau en matière plastique, caractérisé en ce que l'on soude ensemble par ultrasons deux couches (4) de la matière du rideau avec une couche de renforcement (5) ou un insert en matière thermoplastique disposé entre elles, suivant une configuration entourant la position du trou souhaité (3) et espacée de celui-ci, et le trou (3) est découpé et scellé, simultanément avec le soudage, dans la région ainsi entourée.

2. Procédé selon la revendication 1, dans lequel la matière du rideau ne peut être soudée, caractérisé en ce que la couche (5) ou insert est soudée par ultrasons de manière à diffuser dans la matière du rideau des deux couches (4) pour les maintenir ensemble suivant ladite configuration.

3. Procédé selon la revendication 1 ou 2, caractérisé en ce que la configuration du soudage par ultrasons est constituée par une série de zones (13) disposées suivant un cercle centré sur le trou souhaité (3).

4. Procéde selon la revendication 3, caractérisé en ce que les zones sont circulaires.

5. Procédé selon l'une quelconque des revendications 1 à 4, caractérisé en ce qu'un ruban coloré est introduit entre la matière du rideau et un outil de soudage par ultrasons.

0 073 094

FIG.1.

FIG.2.

FIG.3.

1

FIG.4.

FIG.5.

FIG.6

FIG.7.